Europäisches Patentamt

European Patent Office

Office européen des brevets

(11) Numéro de publication: **0 297 937 B1**

# FASCICULE DE BREVET EUROPEEN

(45) Date de publication de fascicule du brevet: **23.09.92**   (51) Int. Cl.5: **C01F   17/00**

(21) Numéro de dépôt: **88401417.6**

(22) Date de dépôt: **10.06.88**

Le dossier contient des informations techniques présentées postérieurement au dépôt de la demande et ne figurant pas dans le présent fascicule.

(54) **Procédé d'obtention d'un oxyde de terre rare et produit obtenu.**

(30) Priorité: **17.06.87 FR 8708440**

(43) Date de publication de la demande:
**04.01.89 Bulletin   89/01**

(45) Mention de la délivrance du brevet:
**23.09.92 Bulletin   92/39**

(84) Etats contractants désignés:
**AT BE CH DE ES FR GB GR IT LI LU NL SE**

(56) Documents cités:
**EP-A- 0 208 581**
**EP-A- 0 209 448**
**FR-A- 1 011 988**
**FR-A- 1 232 937**

**CHEMICAL ABSTRACTS, vol. 74, no. 12, 22 mars 1971, page 470, résumé no. 60296p, Columbus, Ohio, US; N.V. MZAREULISHVILI et al.: "Formation of the hydroxide and basic salts of neodymium", & ISSLED. OBL. KHIM. KOMPLEKS. PROSTYKH SOEDIN. NEKOL. PEREKHODNYKH REDK. METAL. 1970, 159-69**

**CHEMICAL ABSTRACTS, vol. 106, no. 24, juin 1987, page 139, résumé no. 198722k, Columbus, Ohio, US; & CS-A-233 528 (J. ALEXA) 15-08-1986**

(73) Titulaire: **RHONE-POULENC CHIMIE**
**25, quai Paul Doumer**
**F-92408 Courbevoie Cédex(FR)**

(72) Inventeur: **David, Claire**
**14 bis, rue Friant**
**F-75014-Paris(FR)**
Inventeur: **Seon, Françoise**
**50, avenue de la Dame Blanche**
**F-94120-Fontenay Sous/Bois(FR)**

(74) Mandataire: **Dutruc-Rosset, Marie-Claude et al**
**RHONE-POULENC INTERSERVICES Service Brevets Chimie 25, Ouai Paul Doumer**
**F-92408 Courbevoie Cédex(FR)**

## Description

La présente invention a pour objet un procédé d'obtention d'un oxyde de terre rare. Plus précisement, l'invention concerne un procédé de préparation d'un oxyde de terre rare de grande surface spécifique. Elle vise également, à titre de produits industriels nouveaux, les oxydes obtenus.

Dans l'exposé qui suit de l'invention, on entend par surface spécifique, la surface spécifique B.E.T. déterminée selon la méthode BRUNAUER - EMMETT - TELLER, décrite dans le périodique "The Journal of American Society 1938, 60, 309".

On entend également par l'expression "terres rares", les éléments métalliques tels que l'yttrium, le lanthane, le praséodyme, le néodyme, le samarium, l'europium, le gadolinium, le terbium, le dysprosium, l'holmium, l'erbium, le thulium, l'ytterbium et le lutécium.

Dans de nombreuses applications telles que, par exemple dans le domaine de la catalyse, il est souhaitable de disposer d'oxydes de terres rares présentant une grande surface spécifique.

Les procédés classiques d'obtention d'oxydes de terres rares par calcination d'un sel de terre rare sous forme d'un carbonate, d'un hydroxyde ou d'un oxalate à température élevée conduisent à des oxydes de terres rares ayant une surface spécifique relativement faible. On peut citer l'article de S. BERNAL et al [Journal of the Less-Common Metals, 94, 145-150 (1983)] qui décrit des oxydes de terres rares présentant une surface spécifique variant entre 15,1 et 40,5 m$^2$/g, après calcination à une température de 500°C.

On a décrit également dans FR-A-2 584 701, un oxyde de néodyme obtenu par calcination d'un hydroxynitrate de néodyme. Toutefois, l'oxyde obtenu, bien qu'ayant une surface spécifique accrue par rapport aux produits classiques, présente une surface spécifique comprise entre 5 et 30 m$^2$/g après calcination à une température comprise entre 700°C et 900°C.

La présente invention a pour objet un procédé permettant d'obtenir un oxyde de terre rare trivalente à grande surface spécifique.

Le procédé d'obtention d'un oxyde de terre rare trivalente de l'invention est caractérisé par le fait qu'il consiste à préparer un hydroxyde vrai de terre rare par réaction d'au moins un sel de terre rare et d'un base forte en présence d'ions carboxylate, ou par réaction d'un carboxylate de terre rare et d'une base forte, à séparer le précipité obtenu, à le laver, et à le traiter thermiquement à une température comprise entre 300° et 800°C.

Conformément au procédé de l'invention, on précipite un hydroxyde vrai de terre rare Tr(OH)$_3$. Il est possible qu'il contienne une quantité résiduelle d'anions liés ou adsorbés provenant du sel de terre rare de départ mais il est important qu'elle soit la plus faible possible. Toutefois, une quantité minime inférieure à environ 7 % exprimée en % moles et d'anion(s) par rapport au nombre de moles OH$^-$ peut être tolérée.

Dans la première étape du procédé de l'invention, on effectue la préparation de l'hydroxyde vrai de terre rare.

Une première variante d'exécution de l'invention consiste à le précipiter en faisant réagir au moins un sel de terre rare et une base en présence d'ions carboxylate qui peuvent être apportés sous forme acide ou sous la forme d'un sel de métal alcalin ou d'ammonium.

Pour simplifier l'exposé, on désigne par acide carboxylique, toutes les sources d'ions carboxylate qu'ils soient sous forme acide ou salifiée.

On effectue le mélange d'au moins un sel de terre rare et d'un acide carboxylique que l'on fait réagir ensuite avec une base.

Le sel de terre rare mis en oeuvre selon le procédé de l'invention peut être tout sel de terre rare soluble dans les conditions de l'invention. On peut également utiliser un mélange de sels d'une terre rare ou un mélange de sels de différentes terres rares.

L'oxyde de terre rare le plus courant étant un sesquioxyde, on fait appel, le plus souvent, à un sel de terre rare trivalente.

Comme exemples de sels de terres rares susceptibles d'être employés, on peut citer les nitrates, les chlorures, et/ou les sulfates sous forme solide ou sous forme de solution aqueuse.

D'une manière préférentielle, on fait appel à un ou des sels de terres rares sous forme nitrate.

Le sel de terre rare est choisi de telle sorte qu'il ne contienne pas d'impuretés qui puissent se retrouver, dans le produit final. Il peut être avantageux de mettre en jeu un sel de terre rare présentant un degré de pureté supérieure à 99 %.

La concentration de la solution de sel de terre rare n'est pas un facteur critique, selon l'invention et elle peut varier dans de larges limites ; une concentration exprimée en cation métallique comprise entre 0,1 et 3 moles par litre est préférée.

Comme source d'ions carboxylate, on peut faire appel à tout acide carboxylique soluble dans les conditions de l'invention et notamment aux acides carboxyliques aliphatiques, cycloaliphatiques, aromatiques et leurs mélanges. D'une manière préférentielle, on utilise les acides carboxyliques aliphatiques linéaires ou ramifiés ayant de 1 à 20 atomes de carbone.

A titre d'acides carboxyliques convenant à l'invention, on peut citer l'acide formique, l'acide acétique, l'acide propionique, l'acide benzoique. On utilise, de préférence, l'acide acétique.

La proportion de l'acide carboxylique à utiliser par rapport au sel de terre rare n'est pas critique. Le rapport molaire entre l'acide mis en jeu et le sel de terre rare trivalente exprimé en cation métallique peut varier entre 0,1 et 10 et est choisi de préférence entre 0,1 et 5.

Selon le procédé de l'invention, on fait réagir le mélange de la solution aqueuse du sel de terre rare et de l'acide carboxylique avec une base.

La base mise en oeuvre selon l'invention est une solution aqueuse d'une base forte telle que, par exemple, la soude ou la potasse. On choisit, préférentiellement, une solution aqueuse de soude.

La normalité de la solution basique mise en oeuvre n'est pas un facteur critique selon l'invention ; elle peut varier dans de larges limites, par exemple, entre 0,1 et 11 N mais il est préférable de faire appel à des solutions dont la concentration varie entre 1 et 5 N.

La proportion entre la base et le sel de terre rare est telle que le rapport molaire $[OH^-]/[TR]$ exprimé en cation métallique est supérieur ou égal à 3,0.

Il est choisi, de préférence, supérieur ou égal à 3,0 et inférieur ou égal à 10. La borne supérieure n'est pas critique mais il n'y a aucun intérêt à dépasser pour des raisons économiques.

On choisit une concentration finale du milieu réactionnel en terre rare exprimée en cation métallique comprise entre 0,2 et 1 mole/litre et de préférence aux environs de 0,5 mole/litre.

Le mélange des différents réactifs mis en oeuvre dans les quantités définies précédemment est effectué à une température qui peut se situer entre la température ambiante et la température de reflux du mélange réactionnel de préférence entre 80°C et la température de reflux du mélange réactionnel.

La durée de la réaction n'est pas critique. Elle peut varier entre 1 heure et 8 heures, de préférence entre 2 et 5 heures.

On peut réaliser le mélange des réactifs précités selon plusieurs variantes. Par exemple, on peut faire le mélange simultané, sous agitation, du mélange de la solution aqueuse d'au moins un sel de terre rare et d'un acide carboxylique avec la solution basique ou bien additionner, en continu ou en une seule fois, la base dans ledit mélange ou inversement.

Une autre variante d'exécution de l'invention consiste à précipiter un hydroxyde de terre rare vrai en faisant réagir au moins un carboxylate de terre rare avec une base.

A titre de carboxylates de terres rares, on peut faire appel à tout carboxylate de terre rare soluble dans les conditions de l'invention et plus particulièrement à ceux qui dérivent des acides carboxyliques aliphatiques, cycloaliphatiques, aromatiques et leurs mélanges. On utilise de préférence les acides carboxyliques aliphatiques linéaires ou ramifiés ayant entre 1 et environ 20 atomes de carbone.

Comme exemples de carboxylates de terres rares, on peut nommer l'acétate, l'éthyl-2 hexanoate, le néo-décanoate, le stéarate d'une terre rare trivalente.

Les carboxylates de terres rares étant généralement sous forme solide, on les ajoute préférentiellement dans la solution aqueuse de base.

Les proportions des réactifs et les conditions de mise en oeuvre du procédé restent identiques à ce qui est décrit précédemment.

Le précipité d'hydroxyde de terre(s) rare(s) peut être séparé du milieu réactionnel par les techniques courantes de séparation solide-liquide : filtration, décantation, centrifugation ou essorage.

Cette séparation est effectuée généralement à température ambiante.

On soumet ensuite le précipité à une opération de lavage.

Le lavage peut être opéré préférentiellement à l'eau. On utilise de préférence, de l'eau desionisée ou de l'eau distillée.

Il est également possible d'effectuer le lavage avec une solution légèrement acide, par exemple, acidifié à l'acide nitrique dont la concentration peut être inférieure, par exemple à 1 %.

Un tel lavage peut remplacer ou succéder à un lavage à l'eau ou inversement.

Dans le cas où l'on met en oeuvre un carboxylate de terre rare dont le carboxylate correspondant au cation de la base se trouve sous forme insoluble conjointement avec l'hydroxyde de terre rare, il peut s'avérer intéressant d'effectuer le lavage à l'aide d'un solvant organique solubilisant le carboxylate de terre rare. On peut utiliser, par exemple, un solvant, tel que les alcools, par exemple, méthanol, éthanol, n-propanol, isopropanol et les aldéhydes ou cétones par exemple acétone.

On effectue de un à plusieurs lavages et le plus souvent de 1 à 2 lavages.

Un mode de réalisation préféré de l'opération de lavage consiste à mettre le précipité séparé en suspension dans l'eau à raison par exemple de 100 à 300 g/l.

Après un tel lavage, le précipité est séparé selon les techniques classiques précitées.

La teneur en eau libre du précipité séparé est comprise entre 20 et 80 % et généralement entre 20 et 50 %.

Le produit obtenu après séparation et lavage, peut être ensuite séché à l'air ou sous pression réduite de l'ordre de $10^{-2}$ à 100 mm de mercure (133,3322 Pa et 332,2 Pa). La température de séchage peut varier entre la température ambiante et 100°C et la durée de séchage n'est pas critique et peut être comprise entre 2 et 48 heures et de préférence 10 à 24 heures.

Selon la dernière étape du procédé de l'invention, on calcine le produit séché à une température choisie entre 300°C et 800°C mais de préférence, entre 350°C et 600°C. Elle dure environ 30 minutes à 24 heures et de préférence 4 à 8 heures.

La borne inférieure définissant la gamme de température n'est pas critique et peut être abaissée.

Par contre, il n'y a pas intérêt à élever la limite supérieure de la température de calcination car l'on constate une baisse de la surface spécifique de l'oxyde de terre rare obtenu.

La mise en oeuvre du procédé de l'invention tel que décrit précédemment, conduit à l'obtention d'un oxyde de terre rare de grande surface spécifique.

L'invention a également pour objet, à titre de produits industriels nouveaux, un oxyde de terre rare trivalente présentant une surface spécifique d'au moins 44 $m^2$/g mesurée après calcination entre 350°C et 600°C, un volume poreux d'au moins 0,2 $cm^3$/g et des pores d'un diamètre moyen supérieur à 50 Å.

Dans la présente demande, les surfaces spécifiques exprimées sont mesurées sur un produit ayant subi une calcination d'au moins 2 heures à la température donnée.

Le volume poreux et la taille des pores sont déterminés comme la surface spécifique par la méthode BET.

Une première caractéristique de l'oxyde de terre rare selon l'invention est qu'il présente une grande surface spécifique.

L'oxyde de terre rare préféré selon l'invention présente une surface spécifique de 70 à 110 $m^2$/g mesurée après calcination à une température comprise entre 400° et 450°C.

Une autre caractéristique de l'oxyde de terre rare selon l'invention est qu'il présente surface spécifique relativement stable dans une gamme de température allant de 400 à 600°C.

C'est ainsi que l'oxyde de terre rare de l'invention présente encore une surface spécifique de l'ordre de 40 à 70 $m^2$/g mesurée après calcination à 600°C. Sa surface spécifique décroit d'environ 30 $m^2$/g lorsqu'il est soumis à une hausse de température de 400°C à 600°C.

Une autre caractéristique de l'oxyde de terre rare de l'invention est qu'il présente une forte porosité.

Le volume poreux de l'oxyde de terre rare selon l'invention peut varier entre 0,2 et 0,9 $cm^3$/g.

La taille des pores s'échelonne entre 30 et 600 Å. Le diamètre moyen ($d_{50}$) des pores varie entre 50 et 400 Å.

On définit le diamètre moyen comme étant un diamètre tel que tous les pores inférieurs à ce diamètre constituent 50 % du volume poreux ($V_p$)

total.

L'examen par microscopie électronique à balayage montre que l'oxyde de terre rare est constitué de grains très fins de l'ordre de 1$\mu$m à 5 $\mu$m avec présence de gros agglomérats de l'ordre de 20 à 50$\mu$m.

L'examen par microscopie électronique par transmission met en évidence des cristaux de forme aciculaire.

Les dimensions des aiguilles varient entre 100 et 1000 Å et sont le plus souvent voisines de 500 Å.

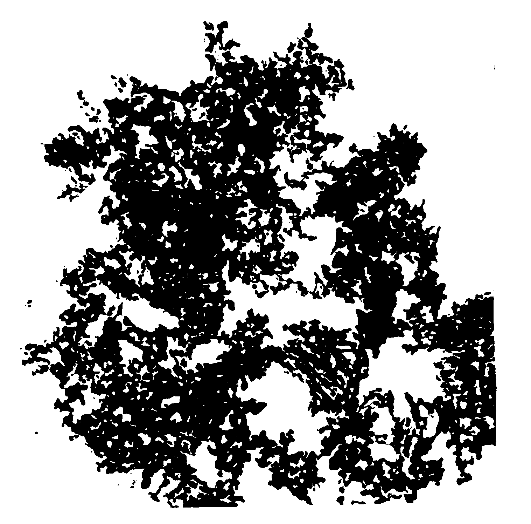

La figure 1 représente une photographie prise au microscope électronique par transmission (grossissement G = 54 000) qui révèle la morphologie de l'oxyde de néodyme sous forme d'aiguilles : ledit oxyde ayant subi une calcination à 600°C.

L'analyse par diffraction X montre que l'oxyde de terre rare obtenu après calcination à 400°C présente une taille de cristallites de l'oxyde de terre rare variant entre 40 et 100 Å.

Conformément à l'invention, on obtient un oxyde de terre rare contenant une quantité résiduelle d'un cation alcalin correspondant au cation de la base mise en oeuvre au cours de la préparation de l'oxyde de terre rare de l'invention. La teneur résiduelle du cation alcalin représente généralement au plus 0,5 % exprimé en % poids de cation métallique par rapport à l'oxyde de terre rare.

On donne ci-après des exemples qui illustrent l'invention sans toutefois la limiter. Dans les exemples, les pourcentages donnés sont exprimés en poids.

Exemple 1

On conduit la préparation d'oxyde d'yttrium dans un réacteur d'une capacité utile de 500 $cm^3$, muni d'une double-enveloppe dans laquelle circule de l'eau thermorégulée à la température désirée et équipé d'un dispositif d'agitation, d'un système d'introduction de réactifs.

On introduit à 20°C, 1 000 $cm^3$ d'une solution aqueuse de soude 1,5 N et l'on porte celle-ci à 95°C.

On additionne alors en 20 minutes, un mélange constitué de 286 $cm^3$ d'une solution aqueuse de nitrate d'yttrium à 1,4 moles/litre et de 12 $cm^3$ d'acide acétique concentré 17,5 N.

L'addition est effectuée à 95°C et sous agitation.

Après addition dudit mélange,on maintient la température réactionnelle pendant 3 heures.

On laisse refroidir, à température ambiante, le mélange réactionnel constitué par une suspension aqueuse d'hydroxyde d'yttrium.

On sépare le précipité d'hydroxyde d'yttrium par filtration sur Büchner (porosité n° 3).

On effectue trois lavages du précipité, à l'aide d'une solution légèrement acide d'acide nitrique à 0,1 % : on met le précipité récupéré en suspension à raison de 100 g de précipité par litre de solution de lavage.

Après filtration, le précipité recueilli est séché dans une étuve à 80°C durant 24 heures.

On obtient 66,6 g d'un produit contenant 45 g de $Y_2O_3$, ce qui permet de déterminer un rendement de réaction de 100 %.

On met le produit séché dans une nacelle en alumine et on le calcine ensuite dans un four à moufles durant 6 heures à 400°C.

L'analyse par diffraction X met en évidence une taille de cristallites de 50 Å.

La méthode BET permet de déterminer une surface spécifique de 108 $m^2/g$, et un volume poreux de 0,78 $cm^3/g$.

Le dosage du sodium par fluorescence X permet de définir un taux de sodium résiduel de 0,16 %.

Exemple 2

On reproduit l'exemple 1 sauf en ce qui concerne la température de calcination qui est de 600°C au lieu de 400°C.

On obtient un oxyde d'yttrium ayant une surface spécifique de 65 $m^2/g$ et présentant une taille des cristallites de 100 Å.

Exemple 3

Dans un appareillage tel que décrit dans l'exemple 1, on introduit à 20°C, 1 000 $cm^3$ d'une solution aqueuse de soude 1,5 N et l'on porte celle-ci à 95°C.

On additionne en 20 minutes et sous agitation 170 $cm^3$ d'une solution aqueuse de nitrate de néodyme à 2,9 moles/litre et 15,7 g d'acide acétique concentré 17,5 N.

Après addition dudit mélange, on maintient la température de 95°C pendant 3 heures.

On laisse refroidir à température ambiante, le mélange réactionnel constitué par une suspension aqueuse d'hydroxyde de néodyme.

On sépare le précipité par filtration sur Büchner (porosité n° 3).

On effectue l'opération de lavage comme dans l'exemple 1.

Après filtration, le solide recueilli est séché 24 heures à 100°C, puis calciné 6 heures à 400°C.

On obtient un oxyde de néodyme présentant une surface spécifique de 79 $m^2/g$ et contenant 0,15 % de sodium résiduel.

Exemple 4

On reproduit l'exemple 3 à la différence près que la calcination est effectuée à 600°C au lieu de 400°C.

On obtient un oxyde de néodyme présentant une surface spécifique de 45 $m^2/g$.

Exemple 5

On conduit la préparation de l'oxyde de néodyme selon le mode opératoire de l'exemple 3 mais l'on remplace les 150 g d'acide acétique concentré par 15,7 g d'acide formique concentré.

L'analyse BET de l'oxyde de néodyme obtenu met en évidence, une surface spécifique de l'ordre de 70 $m^2/g$.

Le taux de sodium résiduel est de 0,12 %.

Exemple 6

Dans un appareillage tel que décrit dans l'exemple 1, on introduit à 20°C, 1 720 $cm^3$ d'une solution aqueuse de soude 1,5 N et l'on porte celle-ci à 95°C.

On additionne en 20 minutes et sous agitation 284 $cm^3$ d'une solution aqueuse de nitrate de lanthane à 2,6 moles/litre et 21,6 g d'acide acétique concentré 17,5 N.

Après addition dudit mélange, on maintient la température de 95°C pendant 3 heures.

On laisse refroidir à température ambiante, le mélange réactionnel constitué par une suspension aqueuse d'hydroxyde de lanthane.

On sépare le précipité par filtration sur Büchner (porosité n° 3).

On effectue l'opération de lavage comme dans l'exemple 1.

Après filtration, le solide recueilli est séché 24 heures à 100°C puis calciné 6 heures à 400°C.

On obtient un oxyde de lanthane ayant une surface spécifique de 72 $m^2/g$.

Exemple 7

On reproduit l'exemple 6 à la différence près que la calcination est effectuée à 600°C au lieu de 400°C.

On obtient un oxyde de lanthane présentant une surface spécifique de 44 $m^2/g$.

Exemple 8

Dans cet exemple, on précipite un hydroxyde d'yttrium en faisant réagir une base avec de l'acétate d'yttrium.

L'acétate d'yttrium est préparé conformément au mode opératoire décrit dans l'encyclopédie GMELIN HAND BOOK - Rare earth Vol D 5 p 34.

Dans un appareillage tel que décrit dans l'exemple 1, on introduit à 20°C, 500 cm³ d'un solution aqueuse de soude 3N que l'on porte à 95°C.

On additionne en 30 minutes et sous agitation, 90 g d'acétate d'ytrrium sous forme solide.

Après l'addition de l'acétate, on maintient la température de 95°C, pendant 4 heures.

On laisse refroidir, à température ambiante, le mélange réactionnel constitué par une suspension aqueuse d'hydroxyde d'yttrium.

On sépare le précipité d'hydroxyde d'yttrium par filtration sur Büchner (porosité n° 3).

On effectue l'opération de lavage comme dans l'exemple 1.

Après filtration, le solide recueilli est séché dans une étuve à 100°C durant 24 heures.

On met le produit séché dans une nacelle en alumine et on le calcine ensuite dans un four à moufles durant 6 heures à 400°C.

On obtient 88,3 g d'un produit contenant 59,2 g de $Y_2O_3$ quipermet de déterminer un rendement de réaction de 95 %.

L'analyse porosimétrique BET met en évidence une surface spécifique de 100 $m^2$/g.

**Revendications**

1. Procédé d'obtention d'un oxyde de terre rare trivalente caractérisé par le fait qu'il consiste à préparer un hydroxyde vrai de terre rare par réaction d'au moins un sel de terre rare et d'une base forte en présence d'ions carboxylates, ou par réaction d'un carboxylate de terre rare et d'une base forte, à séparer le précipité obtenu, à le laver, et à le traiter thermiquement à une température comprise entre 300 et 800°C.

2. Procédé selon la revendication 2 caractérisé par le fait que l'hydroxyde vrai de terre rare est préparé en faisant réagir au moins un sel de terre rare et une base en présence d'ions carboxylate apportés sous forme acide ou sous forme d'un sel d'un métal alcalin ou d'ammonium.

3. Procédé selon l'une des revendications 1 et 2 caractérisé par le fait que le sel de terre rare est un sel de terre rare, un mélange de sels de terre rare ou un mélange de sels de différentes terres rares.

4. Procédé selon l'une des revendications 1 à 3 caractérisé par le fait que le sel de terre rare est un sel de terre rare trivalente.

5. Procédé selon l'une des revendication 1 à 4 caractérisé par le fait que le sel de terre rare est un nitrate, un chlorure et/ou un sulfate de terre rare.

6. Procédé selon l'une des revendications 1 à 5 caractérisé par le fait que la concentration de la solution de sel de terre rare exprimée en cation métallique est comprise entre 0,1 et 3 moles par litre.

7. Procédé selon l'une des revendications 1 à 6 caractérisé par le fait que l'acide carboxylique est un acide carboxylique aliphatique, cycloaliphatique, aromatique ou leurs mélanges.

8. Procédé selon l'une des revendications 1 à 7 caractérisé par le fait que l'acide carboxylique est un acide carboxylique aliphatique linéaire ou ramifié ayant de 1 à 20 atomes de carbone.

9. Procédé selon la revendication 7 caractérisé par le fait que l'acide carboxylique est l'acide formique, l'acide acétique, l'acide propionique, l'acide benzoique.

10. Procédé selon l'une des revendications 1 à 9 caractérisé par le fait que le rapport molaire entre l'acide carboxylique et le sel de terre rare exprimé en cation métallique varie entre 0,1 et 10.

11. Procédé selon la revendication 10 caractérisé par le fait que ledit rapport est compris entre 0,1 et 5.

12. Procédé selon l'une des revendications 1 à 11 caractérisé par le fait que l'on effectue le mélange simultané, sous agitation du mélange de la solution aqueuse de sel(s) de terre(s) rare(s) et de l'acide carboxylique avec la solution basique ou bien additionné, en continu ou en une seule fois, la base dans ledit mélange ou inversement.

13. Procédé selon la revendication 1 caractérisé par le fait qu'il consiste à préparer un hydroxyde vrai de terre rare par réaction d'au moins un carboxylate de terre rare avec une base.

14. Procédé selon la revendication 13 caractérisé par le fait que le carboxylate de terre rare est dérivé d'un acide carboxylique aliphatique, cycloaliphatique aromatique ou leur mélange.

15. Procédé selon la revendication 14 caractérisé par le fait que le carboxylate de terre rare est dérivé d'un acide carboxylique linéaire ou ramifié ayant entre 1 et environ 20 atomes de carbone.

**16.** Procédé selon l'une des revendications 14 et 15 caractérisé par le fait que le carboxylate de terre rare est l'acétate, l'éthyl-2 hexanoate, le néo-décanoate, le stéarate d'une terre rare trivalente.

**17.** Procédé selon l'une des revendications 13 à 16 caractérisé par le fait que l'on ajoute le carboxylate de terre rare dans la solution aqueuse de base.

**18.** Procédé selon la revendication 1 caractérisé par le fait que la base est la soude ou la potasse.

**19.** Procédé selon l'une des revendication 1 à 18 caractérisé par le fait que la proportion entre la base et le sel de terre rare est telle que le rapport molaire $[OH^-]/[TR]$ exprimé en cation métallique est supérieur ou égal à 3,0 est inférieur ou égal à 10.

**20.** Procédé selon la revendication 19 caractérisé par le fait que la concentration finale du milieu réactionnel en terre rare exprimée en cation métallique est comprise entre 0,2 et 1 mole/litre.

**21.** Procédé selon la revendication 1 caractérisé par le fait que la température réactionnelle est comprise entre la température ambiante et la température de reflux du mélange réactionnel.

**22.** Procédé selon la revendication 21 caractérisé par le fait que ladite température est comprise entre 80°C et la température de reflux du mélange réactionnel.

**23.** Procédé selon l'une des revendications 1 à 22 caractérisé par le fait que le précipité séparé est soumis à une opération de lavage à l'eau, à l'aide d'une solution légèrement acidifiée ou à l'aide d'un solvant organique solubilisant le carboxylate correspondant au cation de la base.

**24.** Procédé selon la revendication 23 caractérisé par le fait que le solvant est le méthanol, l'éthanol, le n-propanol, l'isopropanol, l'acétone.

**25.** Procédé selon l'une des revendications 1 à 24 caractérisé par le fait que le précipité séparé est séché à l'air ou sous pression réduite à une température comprise entre la température ambiante et 100°C.

**26.** Procédé selon l'une des revendications 1 à 25 caractérisé par le fait que le produit séché est calciné à une température comprise entre 300 et 800°C.

**27.** Procédé selon la revendication 26 caractérisé par le fait que la température de calcination est choisie entre 350 et 600°C.

**28.** Procédé selon l'une des revendications 26 et 27 caractérisé par le fait que la durée de calcination est de 30 minutes à 24 heures.

**29.** Procédé selon la revendication 28 caractérisé par le fait que la durée de calcination est de 4 à 8 heures.

**30.** Oxyde de terre rare ayant une surface spécifique d'au moins 44 $m^2/g$ mesurée après calcination entre 350° et 600°C caractérisé par le fait qu'il présente un volume poreux d'au moins 0,2 $cm^3/g$ et des pores de diamètre moyen supérieur à 50 Å.

**31.** Oxyde de terre rare selon la revendication 30 caractérisé par le fait qu'il présente une surface spécifique de 70 à 110 $m^2/g$ mesurée après calcination à une température comprise entre 400 et 450°C.

**32.** Oxyde de terre rare selon la revendication 30 ou 31 caractérisé par le fait que sa surface spécifique décroit d'environ 30 $m^2/g$ lorsqu'il est soumis à une hausse de température de 400° à 600°C.

**33.** Oxyde de terre rare selon la revendication 30 caractérisé par le fait qu'il présente une surface spécifique de 40 à 70 $m^2/g$ après calcination à 600°C.

**34.** Oxyde de terre rare selon l'une des revendications 30 à 33 caractérisé par le fait qu'il présente un volume poreux variant entre 0,2 et 0,9 $cm^3/g$.

**35.** Oxyde de terre rare selon l'une des revendications 30 à 34 caractérisé par le fait qu'il présente un diamètre moyen de pores compris entre 30 Å et 600 Å.

**36.** Oxyde de terre rare selon l'une des revendications 30 à 35 caractérisé par le fait qu'il présente des cristaux de forme aciculaire.

**37.** Oxyde de terre rare selon la revendication 36 caractérisé par le fait qu'il se présente sous forme d'aiguilles de dimensions variant entre 100 et 1000 Å.

**38.** Oxyde de terre rare selon l'une des revendications 30 à 37 caractérisé par le fait qu'il présente une teneur résiduelle en cation alcalin représentant au plus 0,5 % du poids de l'oxyde de terre rare exprimé en cation métallique.

**Claims**

1. A method of preparing a trivalent rare earth oxide, characterised in that it comprises preparing a true rare earth hydroxide by reacting at least one rare earth salt and a strong base in the presence of carboxylate ions, or by reacting a rare earth carboxylate with a strong base, then separating the precipitate obtained, washing it and subjecting it to heat treatment at a temperature from 300 to 800°C.

2. The method of claim 1, characterised in that the true rare earth hydroxide is prepared by reacting at least one rare earth salt and a base in the presence of carboxylate ions, in acid form or in the form of an alkali metal salt or an ammonium salt.

3. The method of claim 1 or 2, characterised in that the rare earth salt is one rare earth salt, a mixture of rare earth salts or a mixture of salts of different rare earths.

4. The method of any of claims 1 to 3, characterised in that the rare earth salt is trivalent.

5. The method of any of claims 1 to 4, characterised in that the rare earth salt is a rare earth nitrate, a rare earth chloride and/or a rare earth sulphate.

6. The method of any of claims 1 to 5, characterised in that the concentration of the rare earth salt solution, expressed as metallic cation, is from 0.1 to 3 moles/litre.

7. The method of any of claims 1 to 6, characterised in that the carboxylic acid is an aliphatic, cycloaliphatic or aromatic acid or mixtures thereof.

8. The method of any of Claims 1 to 7, characterised in that the carboxylic acid is a straight chain or branched aliphatic acid with 1 to 20 carbon atoms.

9. The method of Claim 7, characterised in that the carboxylic acid is formic, acetic, propionic or benzoic acid.

10. The method of any of Claims 1 to 9, characterised in that the molar ratio of carboxylic acid to rare earth salt, expressed as metallic cation, ranges from 0.1 to 10.

11. The method of Claim 10, characterised in that said ratio is from 0.1 to 5.

12. The method of any of Claims 1 to 11, characterised in that mixture of aqueous rare earth salt solution and carboxylic acid is mixed simultaneously under agitation with the basic solution, or the base is added to said mixture, either continuously or all at once, or vice versa.

13. The method of Claim 1, characterised in that it comprises preparing a true rare earth hydroxide by reacting at least one rare earth carboxylate with a base.

14. The method of Claim 13, characterised in that the rare earth carboxylate is derived from an aliphatic, cycloaliphatic or aromatic carboxylic acid or a mixture thereof.

15. The method of Claim 14, characterised in that the rare earth carboxylate is derived from a straight chain or branched carboxylic acid with from 1 to about 20 carbon atoms.

16. The method of Claim 14 or 15, characterised in that the rare earth carboxylate is the acetate, the 2-ethyl hexanoate, the neo-decanoate or the stearate of a trivalent rare earth.

17. The method of any of Claims 13 to 16, characterised in that the rare earth carboxylate is added in the basic aqueous solution.

18. The method of Claim 1, characterised in that the base is sodium or potassium hydroxide.

19. The method of any of Claims 1 to 18, characterised in that the proportion of base to rare earth salt is such that the molar ratio $[OH^-]/[RE]$ expressed as metallic cation is at least 3.0 and up to 10.

20. The method of Claim 19, characterised in that the final concentration of rare earth reaction medium, expressed as metallic cation, is from 0.2 to 1 mole/litre.

21. The method of Claim 1, characterised in that the reaction temperature is between ambient temperature and the reflux temperature of the reaction medium.

22. The method of Claim 21, characterised in that said temperature is between 80°C and the reflux temperature of the reaction medium.

23. The method of any of Claims 1 to 22, characterised in that the precipitate separated is washed with water, using a slightly acidified solution or using an organic solvent which solubilises the carboxylate, corresponding to the cation of the base.

24. The method of Claim 23, characterised in that the solvent is methanol, ethanol, n-propanol, isopropanol or acetone.

25. The method of any of Claims 1 to 24, characterised in that the precipitate separated is dried in air or at reduced pressure, at a temperature between ambient temperature and 100°C

26. The method of any of claims 1 to 25, characterised in that the dried product is calcined at a temperature of from 300 to 800°C.

27. The method of claim 26, characterised in that the calcining temperature is from 350 to 600°C.

28. The method of claim 26 or 27, characterised in that the calcining time is from 30 minutes to 24 hours.

29. The method of claim 28, characterised in that the calcining time is from 4 to 8 hours.

30. A rare earth oxide with a specific surface area of at least 44 m2/g, measured after calcination at from 350 to 600°C, characterised in that it has a pore volume of at least 0.2 cm3/g and pores with a mean diameter of over 50 Å.

31. The rare earth oxide of claim 30, characterised in that it has a specific surface area of 70 to 110 m2/g, measured after calcination at a temperature from 400 to 450°C.

32. The rare earth oxide of claim 30 or 31, characterised in that its specific surface area decreases about 30 m2/g when it is subjected to a temperature rise of 400 to 600 °C.

33. The rare earth oxide of claim 30, characterised in that it has a specific surface area of 40 to 70 m2/g after calcination at 600°C.

34. The rare earth oxide of any of claims 30 to 33, characterised in that its pore volume ranges from 0.2 to 0.9 cm3/g.

35. The rare earth oxide of any of claims 30 to 34, characterised in that it has a mean pore diameter from 30 to 600 Å.

36. The rare earth oxide of any of claims 30 to 35, characterised in that it has crystals of acicular shape.

37. The rare earth oxide of claim 36, characterised in that it is in the form of needles varying in size from 100 to 1000 Å.

38. The rare earth oxide of any of claims 30 to 37, characterised in that it has a residual alkaline cation content representing at the maximum 0.5% of the weight of the rare earth oxide expressed as metallic cation.

**Patentansprüche**

1. Verfahren zur Herstellung eines Oxids eines dreiwertigen SE-Elementes, dadurch gekennzeichnet, daß man ein echtes SE-hydroxid herstellt durch Reaktion mindestens eines SE-Salzes mit einer starken Base in Gegenwart von Carboxylationen oder durch Reaktion eines SE-carboxylats mit einer starken Base, daß man den erhaltenen Niederschlag abtrennt, ihn wäscht und ihn bei einer Temperatur im Bereich von 300 bis 800°C thermisch behandelt.

2. Verfahren nach Anspruch 1, dadurch gekennzeichnet, daß das echte SE-hydroxid hergestellt wird, indem man mindestens ein SE-Salz mit einer Base in Gegenwart von Carboxylationen umsetzt, die in Form von Säure oder in Form eines Alkalimetallsalzes oder Ammoniumsalzes eingebracht worden sind.

3. Verfahren nach einem der Ansprüche 1 und 2, dadurch gekennzeichnet, daß das SE-Salz ein SE-Salz, ein Gemisch von Salzen einer Seltenen Erde oder ein Gemisch von Salzen von verschiedenen Seltenen Erden ist.

4. Verfahren nach einem der Ansprüche 1 bis 3, dadurch gekennzeichnet, daß das SE-Salz ein dreiwertiges SE-Salz ist.

5. Verfahren nach einem der Ansprüche 1 bis 4, dadurch gekennzeichnet, daß das SE-Salz ein SE-nitrat, -chlorid und/oder -sulfat ist.

6. Verfahren nach einem der Ansprüche 1 bis 5, dadurch gekennzeichnet, daß die Konzentration der Lösung des SE-Salzes, ausgedrückt als Metallkation, 0,1 bis 3 mol je Liter ausmacht.

7. Verfahren nach einem der Ansprüche 1 bis 6, dadurch gekennzeichnet, daß die Carbonsäure eine aliphatische, cycloaliphatische oder aromatische Carbonsäure oder eines ihrer Gemische ist.

8. Verfahren nach einem der Ansprüche 1 bis 7, dadurch gekennzeichnet, daß die Carbonsäure eine lineare oder verzweigte aliphatische Carbonsäure mit 1 bis 20 Kohlenstoffatomen ist.

9. Verfahren nach Anspruch 7, dadurch gekennzeichnet, daß die Carbonsäure Ameisensäure, Essigsäure, Propionsäure oder Benzoesäure ist.

10. Verfahren nach einem der Ansprüche 1 bis 9, dadurch gekennzeichnet, daß das Molverhältnis von Carbonsäure zu SE-Salz, ausgedrückt als Metallkation, 0,1 bis 10 beträgt.

11. Verfahren nach Anspruch 10, dadurch gekennzeichnet, daß das Verhältnis 0,1 bis 5 beträgt.

12. Verfahren nach einem der Ansprüche 1 bis 11, dadurch gekennzeichnct, daß man gleichzeitig unter Rühren das Genisch aus wäßriger Lösung von SE-Salz (en) und Carbonsäure mit der basischen Lösung vermischt oder die basische Lösung kontinuierlich oder auf einmal dem genannten Gemisch zusetzt oder umgekehrt.

13. Verfahren nach Anspruch 1, dadurch gekennzeichnet, daß man ein echtes SE-hydroxid herstellt durch Reaktion von mindestens einem SE-carboxylat mit einer Base.

14. Verfahren nach Anspruch 13, dadurch gekennzeichnet, daß sich das SE-carboxylat von einer aliphatischen, cycloaliphatischen oder aromatischen Carbonsäure oder deren Gemisch ableitet.

15. Verfahren nach Anspruch 14, dadurch gekennzeichnet, daß sich das SE-carboxylat von einer linearer oder verzweigten Carbonsäure mit 1 bis etwa 20 Kohlenstoffatomen ableitet.

16. Verfahren nach einem der Ansprüche 14 und 15, dadurch gekennzeichnet, daß das SE-carboxylat, das Acetat, 2-Ethylhexanoat, Neodecanoat oder Stearat eines dreiwertigen SE-Elementes ist.

17. Verfahren nach einem der Ansprüche 13 bis 16, dadurch gekennzeichnet, daß man das SE-carboxylat der wäßrigen Lösung der Base zusetzt.

18. Verfahren nach Anspruch 1, dadurch gekennzeichnet, daß die Base Natronlauge oder Kalilauge ist.

19. Verfahren nach einem der Ansprüche 1 bis 18, dadurch gekennzeichnet, daß das Verhältnis zwischen Base und SE-Salz so ist, daß das Molverhältnis $[OH^-]/[SE]$, ausgedrückt als Metallkation, größer oder gleich 3,0 und kleiner oder gleich 10 ist.

20. Verfahren nach Anspruch 19, dadurch gekennzeichnet, daß die SE-Endkonzentration des Reaktionsmediums, ausgedrückt als Metallkation, 0,2 bis 1 mol/1 beträgt.

21. Verfahren nach Anspruch 1, dadurch gekennzeichnet, daß die Reaktionstemperatur im Bereich von Raumtemperatur bis zur Rückflußtemperatur des Reaktionsgemisches liegt.

22. Verfahren nach Anspruch 21, dadurch gekennzeichnet, daß die Temperatur im Bereich von 80°C bis zur Rückflußtemperatur des Reaktionsgemisches liegt.

23. Verfahren nach einem der Ansprüche 1 bis 22, dadurch gekennzeichnet, daß der abgetrennte Niederschlag mit Wasser, mit einer leicht angesäuerten Lösung oder mit einem organischen Lösungsmittel, das das dem Basenkation entsprechende Carboxylat in Lösung bringt, gewaschen wird.

24. Verfahren nach Anspruch 23, dadurch gekennzeichnet, daß das Lösungsmittel Methanol, Ethanol, n-Propanol, Isopropanol oder Aceton ist.

25. Verfahren nach einem der Ansprüche 1 bis 24, dadurch gekennzeichnet, daß der abgetrennte Niederschlag an der Luft oder unter vermindertem Druck bei einer Temperatur im Bereich von Raumtemperatur bis 100°C getrocknet wird.

26. Verfahren nach einem der Ansprüche 1 bis 25, dadurch gekennzeichnet, daß das getrocknete Produkt bei einer Temperatur im Bereich von 300 bis 800°C gebrannt wird.

27. Verfahren nach Anspruch 26, dadurch gekennzeichnet, daß die Brenntemperatur im Bereich von 350 bis 600°C gewählt wird.

28. Verfahren nach einem der Ansprüche 26 und 27, dadurch gekennzeichnet, daß die Brenndauer 30 min bis zu 24 h beträgt.

29. Verfahren nach Anspruch 28, dadurch gekennzeichnet, daß die Brenndauer 4 bis 8 h beträgt.

30. SE-oxid mit einer spezifischen Oberfläche von mindestens 44 $m^2$/g, gemessen nach dem Brennen bei 350 bis 600°C, dadurch gekennzeichnet, daß es ein Porenvolumen von mindestens 0,2 $cm^3$/g und Poren mit einem mittleren Durchmesser über 50 Å aufweist.

31. SE-oxid nach Anspruch 30, dadurch gekennzeichnet, daß es eine spezifische Oberfläche von 70 bis 110 $m^2$/g aufweist, gemessen nach Brennen bei einer Temperatur im Bereich von 400 bis 450°C.

32. SE-oxid nach Anspruch 30 oder 31, dadurch gekennzeichnet, daß seine spezifische Oberfläche um etwa 30 $m^2$/g abnimmt, wenn es einem Temperaturanstieg von 400 auf 600°C unterworfen wird.

33. SE-oxid nach Anspruch 30, dadurch gekennzeichnet, daß es eine spezifische Oberfläche von 40 bis 70 $m^2$/g nach Brennen bei 600°C aufweist.

34. SE-oxid nach einem der Ansprüche 30 bis 33, dadurch gekennzeichnet, daß es ein Porenvolumen im Bereich von 0,2 bis 0,9 $m^3$/g aufweist.

35. SE-oxid nach einem der Ansprüche 30 bis 34, dadurch gekennzeichnet, daß es einen mittleren Porendurchmesser im Bereich von 30 Å bis 600 Å aufweist.

36. SE-oxid nach einem der Ansprüche 30 bis 35, dadurch gekennzeichnet, daß es nadelförmige Kristalle bildet.

37. SE-oxid nach Anspruch 36, dadurch gekennzeichnet, daß es in Form von Nadeln mit Abmessungen im Bereich von 100 bis 1000 Å vorliegt.

38. SE-oxid nach einem der Ansprüche 30 bis 37, dadurch gekennzeichnet, daß es einen Restgehalt an Alkalikation von höchstens 0,5 Gew.-% des SE-oxids, ausgedrückt als Metallkation, aufweist.